(19) Europäisches Patentamt

European Patent Office

Office européen des brevets

(11) Veröffentlichungsnummer: **0 138 239**
**B1**

(12) **EUROPÄISCHE PATENTSCHRIFT**

(45) Veröffentlichungstag der Patentschrift:
03.08.88

(21) Anmeldenummer: **84201182.7**

(22) Anmeldetag: 15.08.84

(51) Int. Cl.⁴: **G 02 B  6/12,** G 02 B  3/00

(54) **Verfahren zur Herstellung eines lichtbeugenden Bauelementes.**

(30) Priorität: 16.08.83  DE 3329510

(43) Veröffentlichungstag der Anmeldung:
**24.04.85 Patentblatt 85/17**

(45) Bekanntmachung des Hinweises auf die Patenterteilung:
**03.08.88 Patentblatt 88/31**

(84) Benannte Vertragsstaaten:
**DE FR GB**

(56) Entgegenhaltungen:
**EP - A - 0 017 296**
**EP - A - 0 052 901**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Böhm, Heinz, Dipl.-Phys., Kneippstrasse 2,
D-8520 Erlangen (DE)**

(74) Vertreter: **Peuckert, Hermann, Dipl.-Ing. et al, Philips
Patentverwaltung GmbH
Wendenstrasse 35 Postfach 10 51 49,
D-2000 Hamburg 1 (DE)**

## Beschreibung

Die Erfindung betrifft ein Verfahren zur Herstellung eines optischen Bauelementes durch Abscheidung vieler übereinanderliegender dünner glasartiger Schichten unterschiedlichen Brechungsindexes in vorgegebener Reihenfolge aus der Dampfphase auf eine feste Unterlage. Danach hergestellte Bauelemente können beispielsweise in der optischen Nachrichtentechnik verwendet werden.

Es ist bekannt, durch Abscheiden vieler dünner glasartiger Schichten unterschiedlichen Brechungsindexes aus der Dampfphase in die Vertiefungen einer Glasplatte rotationssymmetrische Linsen oder optische Wellenleiter herzustellen (europäische Patentanmeldungen Nr. 0 017 296 bzw. 0 052 901). Die Dicke der beschichteten Glasplatte wird dazu nach dem Abscheiden der Schichten wieder auf den ursprünglichen Wert reduziert. Es verbleiben in den Vertiefungen die Hälften von sogenannten Luneberg-Linsen, die aus übereinander liegenden halbschaligen Kugelschichten bestehen, bzw. von optischen Wellenleitern.

Bei dem bekannten Verfahren kommt es sowohl auf die Genauigkeit der Herstellung der Vertiefungen in der Glasplatte als auch auf die Präzision der Bearbeitung beim Reduzieren überstehender Glasschichten an.

Der Erfindung liegt die Aufgabe zugrunde, ein Verfahren zur Herstellung von vielseitig einsetzbaren optischen Bauelementen durch Abscheidung von Glasschichten aus der Dampfphase anzugeben, das mit wenigen Verfahrensschritten auskommt. Diese Aufgabe wird bei einem Verfahren der eingangs genannten Art dadurch gelöst, daß die Schichten auf einer ebenen Unterlage nach einem vorgegebenen Brechungsindexprofil abgeschieden werden, daß nach Verfestigung aus dem Schichtenpaket Teile mit gewünschten wellenoptischen bzw. strahlenoptischen Eigenschaften herausgeschnitten und, daß deren optisch wirksame Oberflächen poliert werden. Die besonderen Vorteile dieses Verfahrens ergeben sich aus der Vielfalt danach herstellbarer optischer Bauteile, die darauf beruht, daß unterschiedliche Schichtenfolgen steuerbar festgelegt werden können.

In einer bevorzugten Ausführungsform werden nach dem genannten Verfahren Schichtenfolgen so abgeschieden, daß ein parabolisches Brechungsindexprofil entsteht und aus dem Schichtenpaket solche Teile geschnitten, bei denen die Schnittflächen einen nach ganzzahligen Vielfachen der Viertel-Strahlperiode (¼ pitch) bemessenen Abstand haben. Ein weiterer Vorteil besteht darin, daß die zum Aufdampfen benötigte Unterlage keine optische Bedeutung haben muß.

Die Erfindung wird mit weiteren Vorteilen anhand der in der Zeichnung schematisch dargestellten Ausführungsbeispiele näher erläutert.

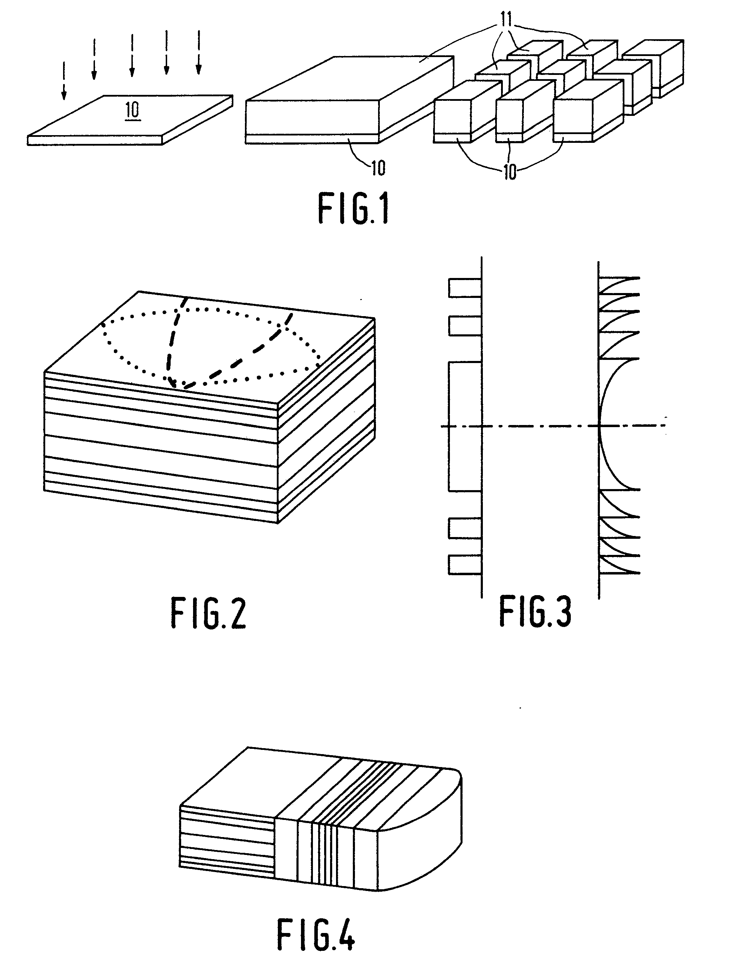

Es zeigen: Figur 1 in dreidimensionaler Ansicht verschiedene Stadien von nach dem Verfahren hergestellten Bauelementen

Figur 2 in dreidimensionaler Ansicht Einzelheiten eines vergrößert herausgezeichneten optischen Bauelementes Figur 3 Diagramme verschiedener, verwendbarer Schichten folgen

Figur 4 in dreidimensionaler Ansicht eine aus nach dem erfindungsgemäßen Verfahren hergestellten Bauelementen bestehende Baugruppe.

Die in Fig. 1 gezeigte Unterlage 10 wird mit einer Vielzahl dünner Schichten aus Glas verschiedenen Brechungsindexes bedampft, angedeutet durch gestrichelte Pfeile. Voraussetzung für in parallelen Ebenen liegenden Schichten ist eine entsprechend geglättete Oberfläche der Unterlage.

Das Beschichten selbst ist als sogenannte CVD-Verfahren aus den Europäischen Patentanmeldungen 0 017 296 bzw. 0 052 901 bekannt. Abweichend zur daraus bekannten Herstellung von Luneberg-Linsen wird das Schichtenpaket anhand optischer Berechnungen in solche Teile zerlegt, die für sich selbständige optische Bauelemente bilden.

Ein nach dem Verfahren hergestelltes Bauelement ist in Fig. 2 vergrößert herausgezeichnet, dessen optische Eigenschaften sich aus dem Abstand der Schnittflächen und der Reihenfolge der Beschichtung ergeben. In einem praktischen Ausführungsbeispiel sind die Schichten erheblich dünner und in einer größeren Zahl als gezeichnet vorhanden.

Das in Figur 2 dargestellte Bauelement kann in zweifacher Hinsicht als Gradienten-Zylinder-Linse verwendet werden, bei dem der Abstand zwischen den Begrenzungsflächen nach der Strahlperiode (pitch) verwendeter Strahlung berechnet ist. Mit gepunkteten Linien ist angedeutet, daß bei Lichtdurchgang von links nach rechts oder umgekehrt eine 0,5-pitch betragende Gradienten-Zylinder-Linse gegeben ist, während senkrecht dazu – also von vorn nach hinten – eine Gradienten-Zylinder-Linse mit 0,25-pitch gegeben ist. Besonders vorteilhaft wird in optischen Systemen ein solches Bauelement gleichzeitig in beiden Richtungen betrieben.

Bei dem in Figur 2 dargestellten Bauelement ist die Unterlage entfernt worden. Eine aus Glas bestehende Unterlage wird in einem anderen, nicht gezeichneten Ausführungsbeispiel mit verwendet, in dem die Strahlung senkrecht zu dieser verläuft und die Schichten als planparallele Platten wirken.

Die Teile der nach dem Verfahren hergestellten Bauelemente können anhand beliebig auswählbarer Brechungsindexverläufe berechnet und danach hergestellt werden. Diagramme anderer Brechungsindexverläufe zeigt Figur 3. Einerseits sind Schichten zweier verschiedener Brechungsindizes vorgesehen, die abwechselnd in verschiedener Dicke aufgebracht werden. Mit Schichten unterschiedlicher Brechungsindizes können die alternierenden Schichten eine Feinstruktur erhalten.

Die in Figur 3 angedeuteten Möglichkeiten von Schichtenfolgen zeigen die Vielfalt der Gestaltungsmöglichkeiten des Verfahrens und der danach herstellbaren unterschiedlichen optischen Bauelemente, z.B. Fresnel-Zylinderlinsen (Applied Optics Vol. 21, No. 11, Juni 82, Seite 1967). Nach dem beschriebenen Verfahren herstellbare Bauelemente haben nicht nur rechteckige äußere Formen. Sie können auch gekrümmte Oberflächen besitzen, die aus einem Schichtenpaket herausgeschnitten werden, wobei die Oberflächen erst durch nachträgliche Schliffe vollendet werden.

Figur 4 zeigt eine Baugruppe aus Bauelementen, die nach dem vorbeschriebenen Verfahren herstellbar sind. Aufgrund glatter Oberflächen lassen sich die nach der Erfindung hergestellten Bauelemente besonders einfach kombinieren, z.B. durch Zusammenkleben, und ergeben in ihrer Kombination ein optisches System, das herkömmlichen Linsen- und Prismengruppen gleichwertig ist, jedoch aufgrund der herstellungsbedingten Form besonders kostengünstig montierbar ist.

Die Erfindung ist darüber hinaus auch gleichzeitig bei der bekannten Linsenherstellung nach dem CVD-Verfahren verwendbar; denn vor dem Abschleifen der überstehenden Schichten lassen sich von einer dazu Vertiefungen enthaltenden Platte Stücke in der vorbeschriebenen Weise, insbesondere vom Rand her, abtrennen, woraus sich eine noch bessere Materialausnutzung ergibt.

**Patentansprüche**

1. Verfahren zur Herstellung eines optischen Bauelementes durch Abschneiden vieler übereinanderliegender dünner glasartiger Schichten unterschiedlichen Brechungsindexes in vorgegebener Reihenfolge aus der Dampfphase auf eine feste Unterlage, dadurch gekennzeichnet, daß die Schichten auf einer ebenen Unterlage nach einem vorgegebenen Brechungsprofil abgeschieden werden, daß nach Verfestigung aus dem Schichtenpaket Teile mit gewünschten wellenoptischen bzw. strahlenoptischen Eigenschaften herausgeschnitten werden und, daß deren optisch wirksame Oberflächen poliert werden.

2. Verfahren nach Anspruch 1, dadurch gekennzeichnet, daß die Schichten in der Weise abgeschieden werden, daß sich ein parabolisches Brechungsindexprofil ergibt und daß solche Teile aus dem Schichtenpaket geschnitten werden, deren Schnittflächen einen nach Vielfachen der Strahlperiode (pitch) bemessenen Abstand haben.

3. Verfahren nach Anspruch1 oder 2, dadurch gekennzeichnet, daß alternierend Schichten unterschiedlichen Brechungsindexes aufgedampft werden.

4. Verfahren nach Anspruch 1, 2 oder 3, dadurch gekennzeichnet, daß mindestens eine der Oberflächen der herausgeschnittenen Teile eine spärischen Form hat.

5. Optisches Bauelement, hergestellt nach einem der Verfahren nach Anspruch 1 bis 4, gekennzeichnet durch einen parabolischen Brechungsindexverlauf zur Bildung einer Gradienten-Zylinder-Linse.

6. Optisches Bauelement, hergestellt nach einem der Ansprüche 1 bis 4, gekennzeichnet durch einen Brechungsindexverlauf zur Bildung einer Fresnel-Zylinderlinse.

7. Optisches Bauelement, hergestellt nach einem der Ansprüche 1 bis 4, gekennzeichnet durch mehrere übereinanderliegende Schichten mit parabolischem Brechungsindexverlauf zur Bildung einer Fresnel-Gradientenindex-Zylinderlinse.

8. Optische Baugruppe aus Bauelementen, hergestellt nach einem der Verfahren nach Anspruch 1 bis 4, dadurch gekennzeichnet, daß mindestens zwei nach dem Verfahren hergestellte Bauelemente flächig zusammengeklebt sind (Fig. 4).

**Claims**

1. A method of manufacturing an optical component by deposition from the vapour phase on a solid substrate of a large number of superimposed thin glassy layers having different refractive indices in a predetermined sequence, characterized in that the layers are deposited on a flat substrate according to a predetermined refractive index profile, in that after solidification parts having the desired wave-optical or ray-optical properties are cut out of the stack of layers, and in that their optically effective surfaces are polished.

2. A method as claimed in Claim 1, characterized in that the layers are deposited such that a parabolic refractive index profile is obtained and that parts are cut out of the stack of layers, the cut faces of said parts having a distance dimensioned in conformity with multiples of the radiation period (pitch).

3. A method as claimed in Claim 1 or 2, characterized in that layers having different refractive indices are alternately deposited.

4. A method as claimed in Claim 1, 2, or 3, characterized in that at least one of the surfaces of the cutout parts is circle.

5. An optical component manufactured according to any one of the methods as claimed in Claims 1 to 4, characterized by a parabolic refractive index profile for forming a graded index cylinder lens.

6. An optical component manufactured as claimed in anyone of the Claims 1 to 4, characterized by a refractive index profile for forming a Fresnel cylinder lens.

7. An optical component manufactured as claimed in any one of the Claims 1 to 4, characterized by several superimposed layers having a parabolic refractive index profile for forming a Fresnel graded index cylinder lens.

8. An optical assembly of components manufactured according to any one of the methods as claimed in Claims 1 to 4, characterized in that at least two of the components manufactured according to the method are jointed together face-to-face by means of an adhesive. (Figure 4).

**Revendications**

1. Procédé pour la fabrication d'un élément optique par dépôt d'un grand nombre de couches vitreuses minces superposées à indices de réfraction différents dans un ordre de succession préalablement donné à partir de la phase de vapeur sur une base solide, caractérisé en ce que les couches sont déposées sur un substrat plan selon un profil d'indices de réfraction préalablement déterminé, qu'après durcissement des parties présentant les propriétés désirées concernant l'optique ondulatoire respectivement l'optique den rayonnement sont découpées dans le paquet de couches et que leurs surfaces optiquement actives sont polies.

2. Procédé selon la revendication 1, caractérisé en ce que les couches sont séparées de façon qu'il se forme un profil d'indices de réfraction parabolique et dans le paquet de couches sont découpées des parties dans lesquelles les surfaces de coupe présentent une distance mesurée selon un multiple entier de quarts de période de rayonnement (¼ pitch).

3. Procédé selon la revendication 2, caractérisé en ce que des couches à indices de réfraction différents sont appliquées par évaporation de façon alternante.

4. Procédé selon la revendication 2 ou 3, caractérisé en ce qu'au moins l'une des surfaces des parties découpées présentent une forme sphérique.

5. Elément optique réalisé selon l'un des procédés selon la revendication 1 à 4, caractérisé par une variation parabolique d'indices de réfraction pour la formation d'une lentille cylindrique à gradient d'indices.

6. Elément optique selon l'une des revendications 1 à 4, caractérisé par une variation d'indices de réfraction pour la formation d'une lentille cylindrique de Fresnel.

7. Elément optique selon l'une des revendications 1 à 4, caractérisé par plusieurs couches superposées présentant une variation d'indices de réfraction parabolique pour la formation d'une lentille cylindrique à gradient d'indices de Fresnel.

8. Groupe optique d'éléments réalisés conformément à l'un des procédés selon la revendication 1 à 4, caractérisé en ce qu'au moins deux éléments réalisés selon le procédé sont collés sous forme d'une face. (Figure 4).

FIG.1

FIG.2

FIG.3

FIG.4